# EUROPÄISCHE PATENTSCHRIFT

(11) **EP 2 006 145 B1**
(45) Veröffentlichungstag und Bekanntmachung des Hinweises auf die Patenterteilung: **14.05.2014**
(21) Anmeldenummer: 08011049.7
(22) Anmeldetag: 18.06.2008
(51) Int. Cl.: B60K 1/04, B66F 9/075

(54) **Verriegelungsmechanismus**
Locking mechanism
Mécanisme de verrouillage

(30) Priorität: 22.06.2007 DE 102007028862
(43) Veröffentlichungstag der Anmeldung: 24.12.2008
(73) Patentinhaber: Jungheinrich Aktiengesellschaft, 22047 Hamburg (DE)
(72) Erfinder: Bögelein, Rolf, 74564 Crailsheim (DE); Plastinin, Oleg, 84028 Landshut (DE)
(74) Vertreter: Tiesmeyer, Johannes

(56) Entgegenhaltungen:
- JP-A- 2000 357 498
- JP-A- 2001 316 090
- JP-U- 2 038 219

## Beschreibung

Die vorliegende Erfindung betrifft einen Verriegelungsmechanismus zum Sichern eines in einem Elektrofahrzeug, insbesondere einem elektrischen Flurförderzeug, aufgenommenen Batterieblocks, umfassend ein fahrzeugseitiges Steckerelement, ein mit diesem zusammensteckbares, mit dem Batterieblock verbundenes Batteriesteckerelement und ein am Fahrzeug angeordnetes, zwischen einer Batteriefreigabestellung und einer Batterieverriegelungsstellung bewegbares, insbesondere schwenkbares Verriegelungselement in Form eines Hebels, der in der Batterieverriegelungsstellung den Batterieblock sichert.

Bei Elektrofahrzeugen, insbesondere elektrisch angetriebenen Flurförderzeugen, mit seitlicher Batterieentnahme ist es üblich, die Batterie durch einen geeigneten Mechanismus gegen seitliches Herausgleiten zu sichern. Um ein Inbetriebsetzen des Fahrzeugs ohne gesicherte Batterie zu verhindern, werden bei bekannten Elektrofahrzeugen bzw. Flurförderzeugen Abfrageeinrichtungen, insbesondere Sensoren, eingesetzt, welche ein entsprechendes Signal über den Sicherungszustand des Batterieblocks an eine zentrale Steuereinheit des Fahrzeugs übermitteln, wobei die Steuereinheit bei nicht gesichertem Batterieblock eine Fahrabschaltung auslöst.

Obwohl Elektrofahrzeuge und insbesondere Flurförderzeuge in der Regel über eine zentrale elektronische Steuereinheit verfügen, ist es wünschenswert, die Anzahl elektronischer Bauteile möglichst gering zu halten, da elektronische Bauteile, insbesondere Sensoren, eine Verkabelung mit der Steuereinheit und eine entsprechende Programmierung der Steuereinheit erfordern.

Aus der JP 2000-357498 A ist ein Verriegelungsmechanismus der Eingangs genannten Art zum Sichern eines in einem elektrischen Flurförderzeug aufgenommenen Batterieblocks bekannt. Der Batterieblock ist in einem seitlich zugänglichen Batteriefach untergebracht und darin mittels eines Verriegelungselementes in Form eines schwenkbaren Hebels gegen Herausbewegen aus dem Batteriefach gesichert. Ein Sperrmechanismus sorgt dafür, dass das Verriegelungselement nur dann aus seiner Batterieverriegelungsstellung in die Batteriefreigabestellung bewegbar ist, wenn das mit dem Batterieblock verbundene Batteriesteckerelement von dem fahrzeugseitigen Steckelement abgezogen worden ist. Auf diese Weise wird sichergestellt, dass der Batterieblock zur Entnahme aus dem Batteriefach nur dann von dem Verriegelungselement freigegeben ist, wenn das Batteriesteckerelement vom fahrzeugseitigen Steckerelement getrennt ist. Ein Abreißen des Batteriekabels beim Herausziehen des Batterieblocks aus dem Batteriefach wird auf diese Weise verhindert. Dieses Sicherungsprinzip funktioniert jedoch nur, wenn die Steckverbindung zwischen Batteriesteckerelement und fahrzeugseitigem Steckerelement nur dann hergestellt wird, wenn zuvor das Verriegelungselement in die Batterieverriegelungsstellung überführt worden ist. Der Sperrmechanismus zur Behinderung der Bewegung des Verriegelungselementes von der Batterieverriegelungsstellung in die Batteriefreigabestellung ist relativ aufwendig.

Aufgabe der Erfindung ist es, einen mit einfachen Mitteln realisierbaren Mechanismus zur Sicherung eines Batterieblocks bereitzustellen, der bei gleicher Sicherungs-Zuverlässigkeit wie bei elektronisch überwachten Verriegelungsmechanismen zu einem vereinfachten elektronischen Steuersystem führt.

Hierzu wird erfindungsgemäß vorgeschlagen, dass das als Hebel ausgebildete Verriegelungselement in seiner Batteriefreigabestellung das fahrzeugseitige Steckerelement wenigstens teilweise verdeckt, so dass die Herstellung einer Steckverbindung zwischen fahrzeugseitigem Steckerelement und Batteriesteckerelement verhindert ist.

Eine solche Abhängigkeit zwischen der Stellung des Verriegelungselements und dem Herstellen bzw. Lösen der Steckverbindung ermöglicht eine zuverlässige mechanische Beeinflussung zwischen den genannten Bauteilen, so dass aufgrund rein mechanischer Wirkungen eine Überwachung des Sicherungszustandes des Batterieblocks erreicht wird.

Zweckmäßig ist die Steckverbindung zwischen fahrzeugseitigem Steckerelement und Batteriesteckerelement in der Batterieverriegelungsstellung des Verriegelungselements herstellbar und lösbar. Da die hergestellte Steckverbindung zwischen dem fahrzeugseitigen Steckerelement und dem Batteriesteckerelement Grundvoraussetzung für die Inbetriebnahme des Elektrofahrzeugs ist, und da diese Steckverbindung nur in der verriegelten Stellung des Verriegelungselements hergestellt werden kann, ist eine Inbetriebnahme des Fahrzeugs bei nicht gesicherter Batterie ausgeschlossen, wodurch die gleiche Betriebssicherheit wie bei einer oben beschriebenen, bekannten sensorisch erfassten Verriegelung erreicht wird.

Das Verriegelungselement verdeckt in seiner Batteriefreigabestellung das fahrzeugseltlge Steckerelement wenigstens teilweise, so dass die Herstellung einer Steckverbindung zwischen fahrzeugseitigem Steckerelement und Batteriesteckerelement verhindert ist. Durch die mechanische Verdeckung, wird das Herstellen der Steckverbindung und somit die Versorgung des Fahrzeugs mit Strom aus dem Batterieblock mit nicht gesichertem Batterieblock zuverlässig verhindert.

Gemäß einer Weiterbildung ist das Verriegelungselement nur bei ausgestecktem Batteriesteckerelement von der Batterieverriegelungsstellung in die Batteriefreigabestellung schwenkbar. Dabei ist es besonders zweckmäßig, wenn das fahrzeugseitige Steckerelement derart angeordnet ist, dass das im fahrzeugseitigen Steckerelement eingesteckte Batteriesteckerelement einen Anschlag für das Verriegelungselement gegen ein Verschwenken in die Batteriefreigabestellung bildet.

Bevorzugt ist das Verriegelungselement auf der Innenseite eines im Fahrzeug ausgebildeten Aufnahmefachs für den Batterieblock angeordnet, wobei das Verriegelungselement in der Batterieverriegelungsstellung den in das Aufnahmefach aufgenommen Batterieblock gegen eine Bewegung aus dem Aufnahmefach sichert.

Gemäß einer weiteren Ausgestaltung des Verriegelungsmechanismus ist eine das Aufnahmefach verschließende Aufnahmefachabdeckung, insbesondere Aufnahmefachtür, in Abhängigkeit der Stellung des Verriegelungselements schließbar, wobei es besonders bevorzugt ist, dass die Aufnahmefachabdeckung nur schließbar ist, wenn das Verriegelungselement in der Batterieverriegelungsstellung ist. Hierdurch ist gewährleistet, dass die Batterie in der Regel zuverlässig vom dafür vorgesehenen Verriegelungselement gegen Herausfallen gesichert ist, wodurch eine Beschädigung der Innenseite der Aufnahmefachabdeckung bzw. ein ungewolltes Öffnen durch einen sich im Betrieb verschiebenden Batterieblock verhindert ist.

In diesem Zusammenhang ist es auch denkbar, die Aufnahmefachabdeckung derart auszugestalten, dass sie in dem das Aufnahmefach schließenden Zustand mit dem Verriegelungselement derart in Eingriff steht, dass eine Bewegung des Verriegelungselements aus seiner Verriegelungsstellung nicht möglich ist.

Besonders bevorzugt ist es, dass das Verriegelungselement um eine Schwenkachse verschwenkbar ist, welche unterhalb oder oberhalb des fahrzeugseitigen Steckerelements verläuft. Dabei ist insbesondere die Anordnung der Schwenkachse unterhalb des fahrzeugseitigen Steckerelements vorteilhaft, weil hierdurch eine Batterieverriegelungsstellung des Verriegelungselements durch herunterschwenken erreicht werden kann. In einer solchen zwecks optimaler Sicherung des Batterieblocks in der Regel horizontalen, heruntergeschwenkten Stellung kann das Verriegelungselement durch einen einfachen mechanischen Anschlag an einer weiteren Bewegung nach unten gehindert werden. Ein Verschwenken entgegen der auf das Verriegelungselement wirkenden Schwerkraft aus dieser Verriegelungsstellung in die in der Regel vertikale Batteriefreigabestellung ist nahezu unmöglich.

Gemäß einem weiteren Aspekt betrifft die Erfindung ein Flurförderzeug mit einen erfindungsgemäßen Verriegelungsmechanismus.

Dabei ist es besonders bevorzugt, dass das Aufnahmefach zwischen einer vorderen und einer hinteren Radachse des Flurförderzeugs angeordnet ist und eine seitliche Entnahme bzw. ein seitliches Einfügen des Batterieblocks aus dem bzw. in das Aufnahmefach ermöglicht.

Nachfolgend wird die Erfindung anhand einer nicht einschränkenden Ausführungsform unter Bezugnahme auf die anliegenden Zeichnungen beschrieben.
- Fig. 1: ist eine perspektivische und schematische Teilschnittdarstellung einer rechten Seite eine Flurförderzeugs mit in ein Aufnahmefach eingeführtem Batterieblock und mit einer Ausführungsform des erfindungsgemäßen Verriegelungsmechanismus.
- Fig. 2: ist eine perspektivische und schematische Teilschnittdarstellung der rechten Seite des Flurförderzeugs, wobei der Batterieblock aus dem Aufnahmefach teilweise herausgezogen ist.
- Fig. 3: ist eine perspektivische und schematische Vergrößerung des in Fig. 1 strichpunktiert begrenzten Bereichs, wobei der Verriegelungsmechanismus in seiner geschlossenen Stellung ist bei nicht angeschlossenem Batterieblock.
- Fig. 4: ist eine perspektivische und schematische Vergrößerung des in Fig. 1 strichpunktiert begrenzten Bereichs, wobei der Verriegelungsmechanismus in seiner geschlossenen Stellung ist bei angeschlossenem Batterieblock.
- Fig. 5: ist eine perspektivische und schematische Vergrößerung des in Fig. 1 strichpunktiert begrenzten Bereichs, wobei der Verriegelungsmechanismus in seiner geöffneten Stellung ist.

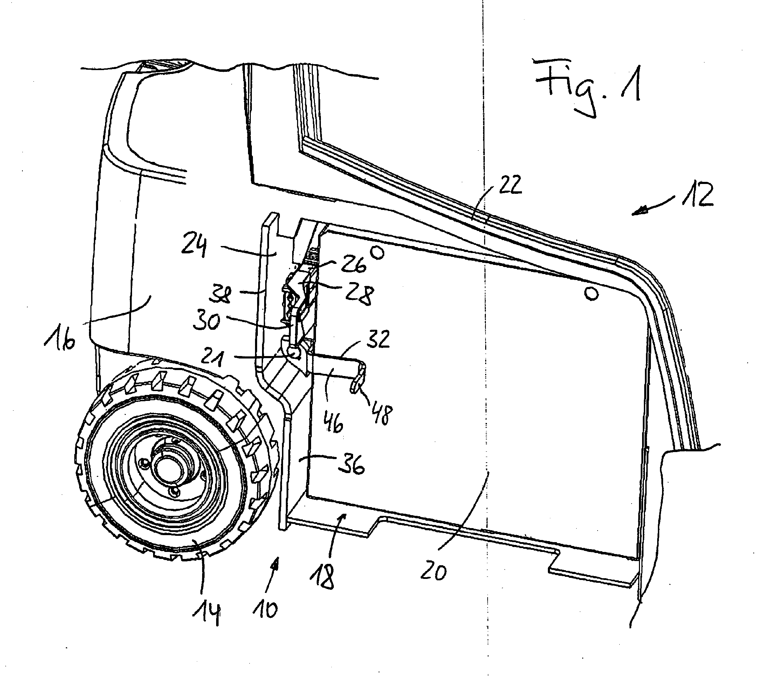

In der Fig. 1 ist ein Teil einer rechten Seite 10 eines elektrisch angetriebenen Flurförderzeugs 12 dargestellt. Man sieht das rechte Hinterrad 14 und eine im Chassis 16 des Flurförderzeugs 12 ausgebildete Aufnahme 18, in die ein Batterieblock 20 eingeführt ist. Das Aufnahmefach 18 erstreckt sich zwischen der zum Hinterrad 14 zugehörigen Radachse und einer nicht dargestellten vorderen Radachse. Oberhalb der Aufnahme 18 ist eine zur Fahrerkabine zugehörige Rahmenkonstruktion 22 angedeutet.

Im Aufnahmefach ist auf der hinteren Innenwand 24 ein fahrzeugseitiges Steckerelement, hier als Buchse 26 ausgeführt, fest mit dem Fahrzeugchassis 16 verbunden. Die Buchse 26 ist bezogen auf die Außenseite des Flurförderzeugs nach Innen versetzt angeordnet. In die Buchse 26 ist ein über ein nicht dargestelltes Kabel mit dem Batterieblock 20 verbundenes Steckelement, hier als Stecker 28 ausgeführt, einsteckbar. Der Stecker 28 weist einen stabilen Griff 30 auf, an dem der Stecker 28 ergriffen und in die Buchse 26 eingesteckt bzw. aus dieser herausgezogen werden kann.

In Fig. 1 ist der Stecker 28 in die Buchse 26 eingeführt und unterhalb des Steckers 28 befindet sich ein Hebel 32, der ein Verriegelungselement für den in die Aufnahme 18 eingeführten Batterieblock 20 bildet. Der Hebel 32 ist an einem Flansch 34 an der hinteren Innenwand 24 der Aufnahme 20 um eine Schwenkachse 21 schwenkbar gelagert, so dass er zwischen einer in Fig. 1 dargestellten Batterieverriegelungsstellung, bzw. geschlossenen Stellung und einer Batteriefreigabestellung (Fig, 2), bzw. geöffneten Stellung verschwenkbar ist.

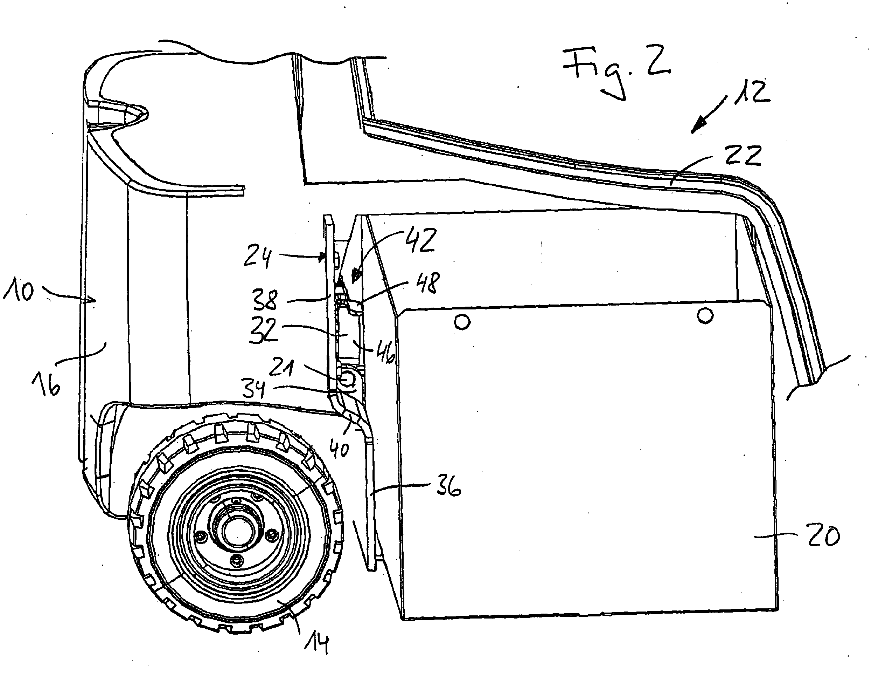

Aus der Fig. 2 ist ersichtlich, dass der Batterieblock 20 als Ganzes aus dem Aufnahmefach 18 herausgenommen werden kann, wenn der Hebel 32 in der geöffneten, also den Batterieblock 20 freigebenden Stellung ist. Die Innenwand 24 des Aufnahmefachs 18 ist zweifach geknickt, so dass sie einen unteren Wandabschnitt 36 und einen oberen Wandabschnitt 38 aufweist, die über einen etwa diagonal verlaufenden Zwischenabschnitt 40 verbunden sind. Der obere Wandabschnitt 38 liegt verglichen mit dem unteren Wandabschnitt weiter hinten, so dass ein Raum 42 gebildet wird, in dem die Buchse 26 und der Hebel 32 untergebracht sind. In der Regel ist der Batterieblock 20 durch im Boden der Aufnahme 18 ausgebildete Führungsschienen geführt, so dass er nicht in Berührung mit dem unteren Wandabschnitt 36 kommen sollte. Allerdings begrenzt der untere Wandabschnitt 36 die insbesondere unabsichtliche Bewegung des Batterieblocks 20 nach hinten, so dass eine Berührung zwischen Batterieblock 20 und Buchse 26 bzw. Hebel 32 in Freigabestellung ausgeschlossen werden kann.

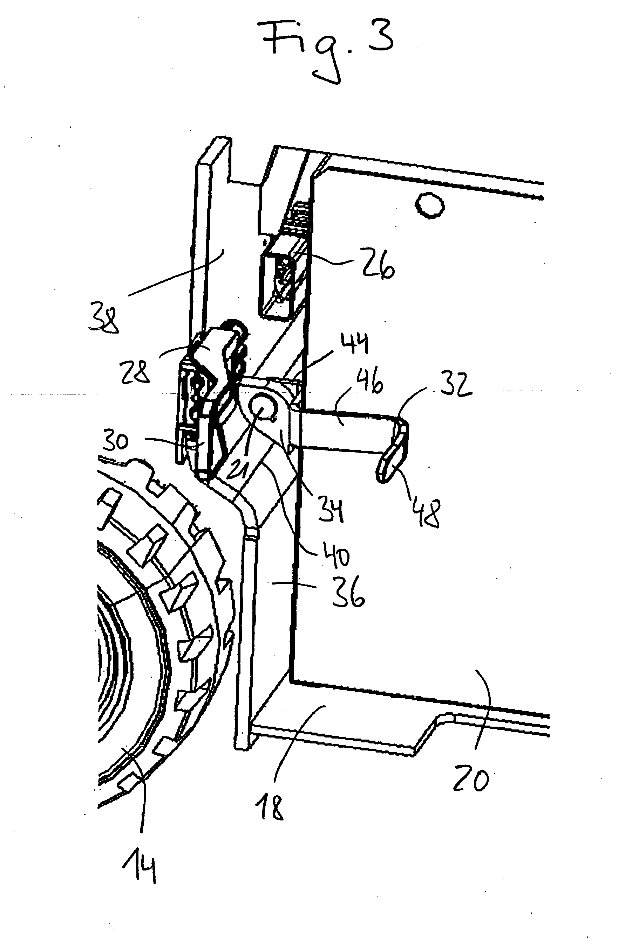

In den Fig. 3 bis 5 sind verschiedene Stellungen des Hebels 32 und der Verbindung zwischen Stecker 28 und Buchse 26 dargestellt, um das Prinzip des Verriegelungsmechanismus zu erklären.

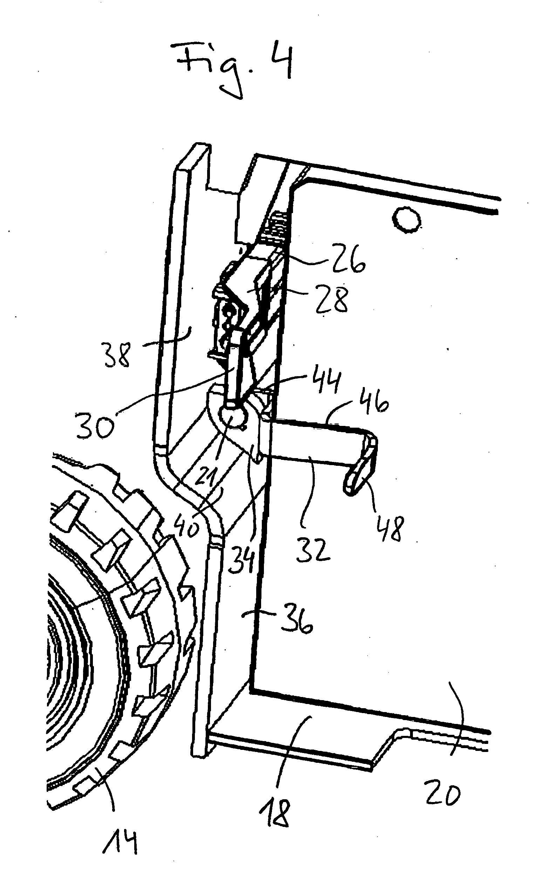

Bei eingesetztem Batterieblock 20 kann der Hebel 32 in die Batterieverriegelungsstellung gemäß Fig. 3 gebracht werden, wobei er hierdurch die Buchse 26 freigibt, so dass der Stecker 28 in die Buchse eingeführt und mit dieser zusammengesteckt werden kann, wie dies in Fig. 4 dargestellt ist. Sofern der Batterieblock durch den Hebel 32 gegen seitliches Herausbewegen aus der Aufnahme 18 gesichert ist und die Steckverbindung zwischen Stecker 28 und Buchse 26 hergestellt ist, kann das Flurförderzeug in Betrieb genommen werden, da die Stromversorgung gewährleistet ist.

Aus der Fig. 4 ist ferner ersichtlich, dass die Buchse nur so weit nach Innen in die Aufnahme 18 versetzt ist, dass der Stecker 28 im eingesteckten Zustand mit einem Teil, insbesondere mit einem Abschnitt des Griffs 30, das Bewegen des Hebels 32 aus der Verriegelungsstellung in die geöffnete Stellung gemäß Fig. 3 verhindert. Das Freigeben des Batterieblocks 20 durch den Hebel 32 ist folglich nur bei ausgestecktem Stecker 28 möglich.

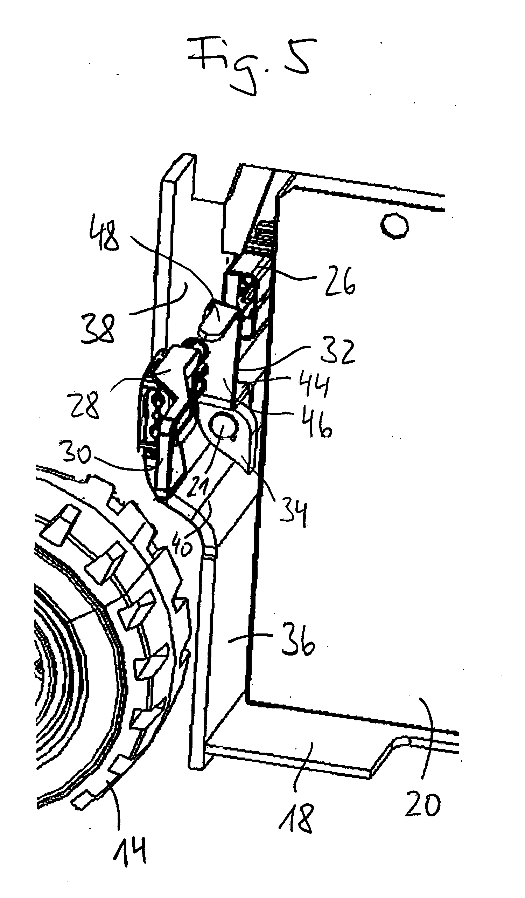

Sobald der Stecker 28 aus der Buchse 26 herausgezogen ist, kann der Hebel 32 in die Batteriefreigabestellung gemäß Fig. 5 verschwenkt werden. In dieser Stellung versprerrt der Hebel 32 den Zugang zur Buchse 26, so dass ein Anschließen des Steckers 28 in der Freigabestellung des Hebels 32 nicht möglich ist. Somit erfolgt keine Inbetriebnahme des Flurförderzeugs bei nicht korrekt eingeführtem und gesichertem Batterieblock.

Der Hebel 32 ist an drei Stellen um etwa 90 Grad gekrümmt, so dass er ein wellenartiges Profil aufweist. Hierdurch werden ein Befestigungsabschnitt 44, der mit dem Flansch 34 verbunden ist, ein Verriegelungsabschnitt 46 und ein Betätigungsabschnitt 48 gebildet. Der Verriegelungsabschnitt 46 ist dabei derart bemessen, dass er in der Verriegelungsstellung den Batterieblock gegen seitliches Herausbewegen aus der Aufnahme 18 in der Verriegelungsstellung zuverlässig sichert und dass er in der Freigabestellung die Buchse 26 zu einem solchen Ausmaß abdeckt, dass der Stecker 28 nicht in die Buchse eingesteckt werden kann.

Durch das Zusammenwirken zwischen der Anordnung der Buchse 26, der Dimensionierung des Steckers 28 und der Anordnung des Hebels 32 bezogen auf die Buchse 26 bzw. den in die Buchse eingesteckten Stecker 28 ergibt sich eine zuverlässige mechanische Sicherung des Batterieblocks einerseits und eine zuverlässige, nicht elektronische Überwachung einer korrekten Inbetriebsetzung des Flurförderzeugs.

Die Aufnahme 18 wird in der Regel durch eine in den Figuren nicht dargestellte Abdeckung, insbesondere Tür geschlossen. Die Abdeckung kann dabei insbesondere auch so ausgebildet sein, dass sie nur dann geschlossen werden kann, wenn der Hebel 32 in der Verriegelungsstellung gemäß Fig. 3 und 4 ist. Hierzu kann sie beispielsweise in dem Bereich, in den der Hebel 32 in seiner Freigabestellung zu liegen kommen würde, einen nach Innen gerichteten, also dem Hebel 32 zugewandten, vorstehenden Anschlag aufweisen, der das Schließen der Abdeckung verunmöglicht, wenn der Hebel 32 in der Freigabestellung eingestellt ist.

Selbstverständlich sind neben der hier dargestellten Ausführungsform als schwenkbarer Hebel auch andere hier nicht beanspruchte Ausführungsformen für das Verriegelungselement denkbar. Beispielsweise kann es als eine Art Schieber ausgestaltet sein, der zwischen der Freigabe- und der Verriegelungsstellung im wesentlichen horizontal hin und her geschoben werden kann.

Der Verriegelungsmechanismus gemäß der vorliegenden Erfindung führt durch seinen einfachen mechanischen Aufbau dazu, dass auf eine elektronische Komponente zur Erfassung der ordnungsgemäßen Batterieverriegelung und eine entsprechende Programmierung einer zentralen Steuereinheit verzichtet werden kann, so dass eine Vereinfachung bei der elektronischen Steuerung erreicht wird.

## Patentansprüche

1. Verriegelungsmechanismus zum Sichern eines in einem Elektrofahrzeug, insbesondere einem elektrischen Flurförderzeug, aufgenommenen Batterieblocks (20), umfassend ein fahrzeugseitiges Steckerelement (26), ein mit diesem zusammensteckbares, mit dem Batterieblock (20) verbundenes Batteriesteckerelement (28) und ein am Fahrzeug (12) angeordnetes, zwischen einer Batteriefreigabestellung und einer Batterieverriegelungsstellung bewegbares, insbesondere schwenkbares Verriegelungselement (32) in Form eines Hebels, der in der Batterieverriegelungsstellung den Batterieblock (20) sichert, **dadurch gekennzeichnet, dass** das als Hebel ausgebildete Verriegelungselement (32) in seiner Batteriefreigabestellung das fahrzeugseitige Steckerelement (26) wenigstens teilweise verdeckt, so dass die Herstellung einer Steckverbindung zwischen fahrzeugseitigem Steckerelement (26) und Batteriesteckerelement (28) verhindert ist.

2. Verriegelungsmechanismus nach Anspruch 1, **dadurch gekennzeichnet, dass** die Steckverbindung zwischen fahrzeugseitigem Steckerelement (26) und Batteriesteckerelement (28) in der Batterieverriegelungsstellung des Verriegelungselements (32) herstellbar und lösbar ist.

3. Verriegelungsmechanismus nach einem der vorhergehenden Ansprüche, **dadurch gekennzeichnet, dass** das Verriegelungselement (32) nur bei ausgestecktem Batteriesteckerelement (28) von der Batterieverriegelungsstellung in die Batteriefreigabestellung schwenkbar ist.

4. Verriegelungsmechanismus nach Anspruch 3, **dadurch gekennzeichnet, dass** das fahrzeugseitige Steckerelement (26) derart angeordnet ist, dass das im fahrzeugseitigen Steckerelement (26) eingesteckte Batteriesteckerelement (28) einen Anschlag (30) für das Verriegelungselement (32) gegen ein Verschwenken in die Batteriefreigabestellung bildet.

5. Verriegelungsmechanismus nach einem der vorhergehenden Ansprüche, **dadurch gekennzeichnet, dass** das Verriegelungselement (32) auf der Innenseite (24) eines im Fahrzeug ausgebildeten Aufnahmefachs (18) für den Batterieblock (20) angeordnet ist.

6. Verriegelungsmechanismus nach Anspruch 5, **dadurch gekennzeichnet, dass** das Verriegelungselement (32) in der Batterieverriegelungsstellung den in das Aufnahmefach (18) aufgenommen Batterieblock (22) gegen eine Bewegung aus dem Aufnahmefach (18) sichert.

7. Verriegelungsmechanismus nach Anspruch 5 oder 6, **dadurch gekennzeichnet, dass** eine das Aufnahmefach (18) verschließende Aufnahmefachabdeckung, insbesondere Aufnahmefachtür, in Abhängigkeit der Stellung des Verriegelungselements (32) schließbar ist.

8. Verriegelungsmechanismus nach Anspruch 7, **dadurch gekennzeichnet, dass** die Aufnahmefachabdeckung nur schließbar ist, wenn das Verriegelungselement (32) in der Batterieverriegelungsstellung ist.

9. Verriegelungsmechanismus nach Anspruch 7 oder 8, **dadurch gekennzeichnet, dass** die Aufnahmefachabdeckung derart ausgebildet ist, dass sie in dem das Aufnahmefach (18) schließenden Zustand mit dem Verriegelungselements (32) derart in Eingriff steht, dass eine Bewegung des Verriegelungselements aus seiner Verriegelungsstellung verhindert ist.

10. Verriegelungsmechanismus nach einem der vorhergehenden Ansprüche, **dadurch gekennzeichnet, dass** das Verriegelungselement (32) um eine Schwenkachse (21) verschwenkbar ist, welche unterhalb oder oberhalb des fahrzeugseitigen Steckerelements (26) verläuft.

11. Flurförderzeug umfassend einen Verriegelungsmechanismus nach einem der vorhergehenden Ansprüche.

12. Flurförderzeug nach Anspruch 11, **dadurch gekennzeichnet, dass** das Aufnahmefach (18) zwischen einer vorderen und einer hinteren Radachse des Flurförderzeugs angeordnet ist und eine seitliche Entnahme bzw. ein seitliches Einfügen des Batterieblocks (20) aus dem bzw. in das Aufnahmefach (18) ermöglicht.

## Claims

1. A locking mechanism, for securing a battery pack (20) that is received in an electric vehicle, in particular an electric industrial truck, including a plug element (26) on the vehicle side, a battery plug element (28) that is connected to the battery pack (20) and may be connected to the plug element (26) by their being plugged into one another, and a locking element (32) which is arranged on the vehicle (12) and may be moved, in particular pivoted, between a battery release position and a battery locking position and which is in the form of a lever which in the battery locking position secures the battery pack (20), **characterised in that**, in its battery release position, the locking element (32) that takes the form of a lever at least partly covers over the plug element (26) on the vehicle side, such that the possibility of making a plug connection between the plug element (26) on the vehicle side and the battery plug element (28) is prevented.

2. A locking mechanism according to Claim 1, **characterised in that** the plug connection between the plug element (26) on the vehicle side and the battery plug element (28) may be made and released in the battery locking position of the locking element (32).

3. A locking mechanism according to one of the preceding claims, **characterised in that** the locking element (32) may be pivoted from the battery locking position into the battery release position only when the battery plug element (28) is unplugged.

4. A locking mechanism according to Claim 3, **characterised in that** the plug element (26) on the vehicle side is arranged such that when the battery plug element (28) is plugged into the plug element (26) on the vehicle side it forms a stop (30) for the locking element (32) to prevent pivoting into the battery release position.

5. A locking mechanism according to one of the preceding claims, **characterised in that** the locking element (32) is arranged on the inner side (24) of a receiving compartment (18), constructed in the vehicle, for the battery pack (20).

6. A locking mechanism according to Claim 5, **characterised in that** when the locking element (32) is in the battery locking position it secures the battery pack (22) received in the receiving compartment (18) to prevent its moving out of the receiving compartment (18).

7. A locking mechanism according to Claim 5 or 6, **characterised in that** a receiving compartment cover, in particular a receiving compartment door, which closes the receiving compartment (18) is closable in dependence on the position of the locking element (32).

8. A locking mechanism according to Claim 7, **characterised in that** the receiving compartment cover is only closable when the locking element (32) is in the battery locking position.

9. A locking mechanism according to Claim 7 or 8, **characterised in that** the receiving compartment cover is constructed such that, in the condition closing the receiving compartment (18), it is in engagement with the locking element (32) such that the possibility of movement of the locking element out of its locking position is prevented.

10. A locking mechanism according to one of the preceding claims, **characterised in that** the locking element (32) is pivotal about a pivot axis (21) which extends below or above the plug element (26) on the vehicle side.

11. An industrial truck, including a locking mechanism according to one of the preceding claims.

12. An industrial truck according to Claim 11, **characterised in that** the receiving compartment (18) is arranged between a front and a rear wheel axle of the industrial truck and enables the battery pack (20) to be removed laterally or inserted laterally from or into the receiving compartment (18).

## Revendications

1. Mécanisme de verrouillage destiné à bloquer un bloc de batterie (20) logé dans un véhicule électrique, en particulier un chariot de manutention électrique, comprenant un élément de connecteur côté véhicule (26), un élément de connecteur de batterie (28) relié au bloc de batterie (20) et connectable à celui-ci et un élément de verrouillage (32) sous la forme d'un levier, disposé sur le véhicule (12), déplaçable, en particulier pivotant, entre une position de libération de la batterie et une position de verrouillage de la batterie, qui, dans la position de verrouillage de la batterie, bloque le bloc de batterie (20), **caractérisé en ce que** l'élément de verrouillage (32) réalisé sous la forme d'un levier recouvre au moins partiellement, dans sa position de libération de la batterie, l'élément de connecteur côté véhicule (26), de telle manière que la réalisation d'une liaison de connexion entre l'élément de connecteur côté véhicule (26) et l'élément de connecteur de batterie (28) soit empêchée.

2. Mécanisme de verrouillage selon la revendication 1, **caractérisé en ce que** la liaison de connexion entre l'élément de connecteur côté véhicule (26) et l'élément de connecteur de batterie (28) est réalisable et séparable dans la position de verrouillage de la batterie de l'élément de verrouillage (32).

3. Mécanisme de verrouillage selon l'une quelconque des revendications précédentes, **caractérisé en ce que** l'élément de verrouillage (32) ne peut pivoter de la position de verrouillage de la batterie à la position de libération de la batterie que lorsque l'élément de connecteur de batterie (28) est déconnecté.

4. Mécanisme de verrouillage selon la revendication 3, **caractérisé en ce que** l'élément de connecteur côté véhicule (26) est disposé de telle manière que l'élément de connecteur de batterie (28) engagé dans l'élément de connecteur côté véhicule (26) forme une butée (30) pour l'élément de verrouillage (32) contre un pivotement dans la position de libération de la batterie.

5. Mécanisme de verrouillage selon l'une quelconque des revendications précédentes, **caractérisé en ce que** l'élément de verrouillage (32) est disposé sur le côté intérieur (24) d'un compartiment de réception (18) formé dans le véhicule pour le bloc de batterie (20).

6. Mécanisme de verrouillage selon la revendication 5, **caractérisé en ce que** l'élément de verrouillage (32) bloque, dans la position de verrouillage de la batterie, le bloc de batterie (20) logé dans le compartiment de réception (18) contre un déplacement hors du compartiment de réception (18).

7. Mécanisme de verrouillage selon la revendication 5 ou 6, **caractérisé en ce qu'**un couvercle du compartiment de réception fermant le compartiment de réception (18), en particulier une porte du compartiment de réception, peut être fermé en fonction de la position de l'élément de verrouillage (32).

8. Mécanisme de verrouillage selon la revendication 7, **caractérisé en ce que** le couvercle du compartiment de réception ne peut être fermé que lorsque l'élément de verrouillage (32) se trouve dans la position de verrouillage de la batterie.

9. Mécanisme de verrouillage selon la revendication 7 ou 8, **caractérisé en ce que** le couvercle du compartiment de réception est réalisé de telle manière qu'il soit en prise avec l'élément de verrouillage (32), dans l'état fermant le compartiment de réception (18), de telle manière qu'un déplacement de l'élément de verrouillage hors de sa position de verrouillage soit empêché.

10. Mécanisme de verrouillage selon l'une quelconque des revendications précédentes, **caractérisé en ce que** l'élément de verrouillage (32) peut pivoter autour d'un axe de pivotement (21), qui s'étend en dessous ou au-dessus de l'élément de connecteur côté véhicule (26).

11. Chariot de manutention comprenant un mécanisme de verrouillage selon l'une quelconque des revendications précédentes.

12. Chariot de manutention selon la revendication 11, **caractérisé en ce que** le compartiment de réception (18) est disposé entre un essieu avant et un essieu arrière du chariot de manutention et permet un enlèvement latéral ou une introduction latérale du bloc de batterie (20) hors du ou dans le compartiment de réception (18).
